# EUROPEAN PATENT SPECIFICATION

(11) **EP 3 533 998 B1**
(45) Date of publication and mention of the grant of the patent: **28.04.2021**
(21) Application number: 18159519.0
(22) Date of filing: 01.03.2018
(51) Int. Cl.: F03D 80/00

(54) **METHOD FOR CORROSION PROTECTION IN A WIND TURBINE AND WIND TURBINE**
VERFAHREN ZUM KORROSIONSSCHUTZ EINER WINDTURBINE UND WINDTURBINE
PROCÉDÉ DE PROTECTION CONTRE LA CORROSION DANS UNE ÉOLIENNE ET ÉOLIENNE

(43) Date of publication of application: 04.09.2019
(73) Proprietor: Siemens Gamesa Renewable Energy A/S, 7330 Brande (DK)
(72) Inventor: Elmose, Soeren Forbech, 7441 Bording (DK); Janakiraman, Shravan Subramanyam, 8700 Horsens (DK); Nyboe, Anders, 8654 Bryrup (DK)
(74) Representative: Aspacher, Karl-Georg

(56) References cited:
- WO-A1-2012/100772
- GB-A- 2 528 713
- JP-A- S57 103 790
- US-A1- 2009 044 482

## Description

The invention concerns a method for corrosion protection in bolt holes of a wind turbine and a wind turbine.

Wind turbines are often installed offshore or in onshore sites with humid climate, like, for example, northern Europe. In such environments, water may cause corrosion in structures of the wind turbines. In particular, bolt holes are susceptible to such corrosion, which may result in cracking of wind turbine components, which consequently have to be replaced. Modern wind turbines may comprise 1000 or more bolt holes which thus need corrosion protection measures to withstand the adversary conditions at their installation site. In particular, this corrosion protection is supposed to be efficient for the whole lifetime of the wind turbine.

To provide such corrosion protection, products based on oil and wax were proposed to protect bolt holes from corrosion. However, these materials provide no long-term solution. Another proposal was to use thermal spray metallization, which led to excessive temperature build-up in the bolt holes and thus cannot be applied.

In current wind turbines, paint coatings are used as corrosion protection. However, this solution has disadvantages. During production, the adhesion properties, for example due to low-quality sandblasting processes, are not sufficient. Additionally, uneven coating film formation in the bolt holes results in poor corrosion protection. All solutions using paint additionally suffer the disadvantage that they cannot resist impact from the bolt mounting process. A prior art example can be found in WO2012100772.

It is thus an object of the present invention to provide reliable and easy-to-apply corrosion protection to bolt holes of a wind turbine.

This object is achieved by providing a method according to claim 1 and a wind turbine according to claim 8. Advantageous embodiments are subject of the dependent claims.

In a method according to the invention, a sleeve made of a corrosion resistant metallic material is inserted into the bolt hole, preferably covering the whole length of the bolt hole walls, and is at least partly expanded using an expander tool, the sleeve being expanded to be fixed in the bolt hole.

While in most cases the sleeve will be covering the whole length of the bolt hole, thus fully protecting it, it is also conceivable to use sleeves that cover only part of the length of the bolt hole.

The sleeve, in particular, has a cylindrical form corresponding to the bolt hole, in particular such that the outer diameter of the sleeve at least essentially matches the diameter of the bolt hole. Using sleeves made of corrosion resistant metal or metal alloys, i.e. pure metal or alloy, in particular aluminium and/or zinc, ensures that a sufficient amount of corrosion resistant metal is applied for any full lifetime in a marine environment. A sleeve, for example an aluminium sleeve or a zinc sleeve, is inserted into a bolt hole for a wind turbine component and then expanded, such that is it fixated in the bolt hole.

The sleeve delivers appropriate corrosion protection for extended durability along with sufficient mechanical strength to resist impact from the bolt mounting process. This has up to now not been achievable with coating systems used in the state of the art. As the fixing of the sleeves in the bolt holes is easy to perform, significant savings in production time and also in material cost can be achieved, compared to solutions using paint or similar coatings.

The proposed method and corrosion protection as such is particularly suitable for blade bearings, but can, of course, also be applied to other, in particular larger and/or deeper bolt holes of a wind turbine.

Tests regarding the corrosion protection have been performed on bolt holes provided with a sleeve as described above. Salt spray testing according to ISO 9227 has been applied for 1440 hours, sea water immersion according to ISO 20340 method B has been applied for 4200 hours, corresponding to a C5 environment. A sleeve made of an aluminium alloy has been used. No corrosion was observed in the sleeve material or the bolt hole material, in this case and for most components of the wind turbine being steel.

As has additionally been shown, the sleeves fixed by expanding them in the bolt hole showed good adhesion with the bolt hole base material, in particular steel, resisting an axial force corresponding to more than 5 tons. The tests also showed that a sleeve thickness of 1.2 mm is sufficient to obtain the corrosion protection needed. In general, the sleeve may have a thickness of at least 1.2 mm, in particular 1.2 mm to 3 mm.

The aluminium alloy used in the tests also had a high ductility and was highly resistant to pitting corrosion.

Another advantage of the current invention is that expansion technology usable to fix the sleeve in a bolt hole is already known from other fields of technology, in particular in relation to pipe coolers and heat exchangers. In particular, so-called tube expanders may be used as expander tool. Pipe coolers and heat exchangers can be constructed by inserting cooling/heating pipes into drilled holes in two and-pieces. The pipes are mechanically fixed in the drilled holes by expanding the pipe with tube rolling equipment or the like. For example, an electrical or pneumatic roller machine having an expander mandrel can be used as tube expander. In this field of the art, the expanding method is widely used and stationary and handheld expander tools are commercially available worldwide. These tools can also be used as expander tools in the method according to the invention.

Preferably, at least the end parts of the sleeves, in particular extending over at least 20% of the sleeve, are expanded. However, in a more preferred embodiment, the sleeve is expanded over its whole length. In this manner, the best mechanical adherence is achieved. If, due to production issues, it is not possible to expand the sleeves over their whole length, it is preferred that the end parts of the sleeves are expanded, preferably the first 20 to 25% in each end of the sleeves. If, for example, a 200 mm deep bearing is used as a bolt hole, 40 to 50 mm from both sides of the sleeve may be expanded.

In another preferred embodiment, the sleeve protrudes from the bolt hole at at least one end, in particular both ends, to form a holding rim when the sleeve is expanded. In this manner, the axial influence of the bolts during the mounting thereof may be mitigated or avoided. During the expansion process, the protruding part may be crimped to form the holding rim or a protrusion may be formed by expanding material from the protruding part further than the inner diameter of the bolt hole. Such a holding rim may also be termed overhang or corbel.

The invention also comprises a wind turbine, comprising bolt holes for bolted connection between components, wherein at least a part of the bolt holes has a sleeve made of a corrosion resistant metallic material fixed therein by expanding, in particular using a method according to the invention, and preferably covering the whole length of the bolt holes. All embodiments and comments regarding the inventive method can also be applied to the wind turbine according to the invention, in particular the corrosion resistant metallic material comprising zinc and/or aluminium and/or the sleeve having a holding rim. It is noted at this point that the corrosion resistant metallic material may be an alloy or a single metal.

In a preferred embodiment, the sleeved bolt holes are used for connecting blade bearings to a hub. As already mentioned, the method is particularly suited for both bolted connections, since large forces occur at these components such that corrosion effects, in particular those leading to cracks, have to be avoided, which is achieved by the current invention.

As is often the case in wind turbines, the bolt hole walls may be made of steel. Corrosion protection is particularly important in marine applications, such that the wind turbine may preferably be an offshore wind turbine. However, the invention can also be advantageously applied in any humid onshore site.

Further details and advantages of the current invention can be taken from the following description of preferred embodiments in conjunction with the drawings, in which:
- Fig. 1 to 6: illustrate materials and steps of an embodiment of the method according to the invention, and
- Fig. 7: shows a detail of the connection area between blades and a hub in a wind turbine according to the invention.

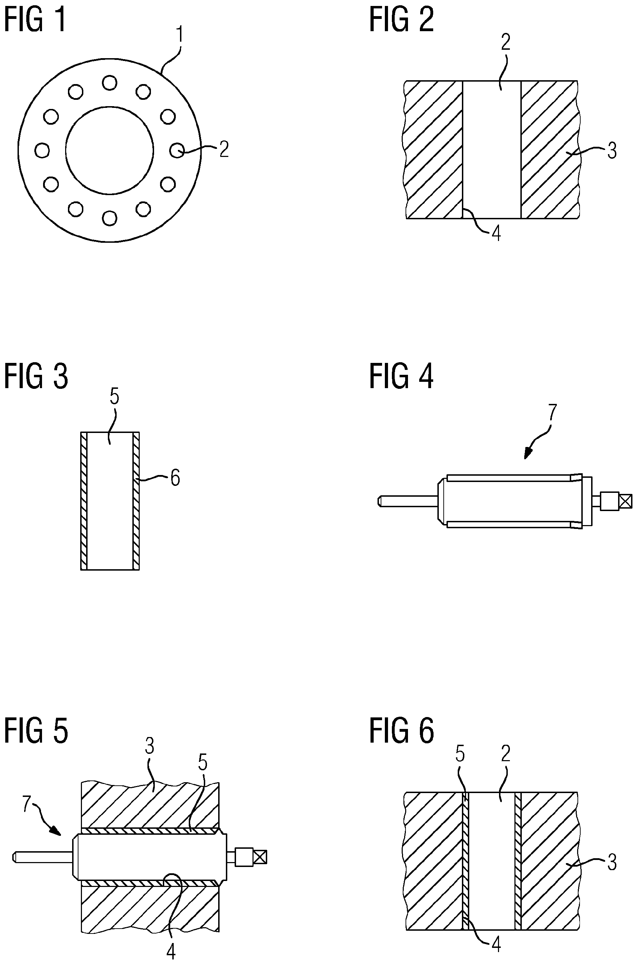

Figures 1 to 6 show materials and illustrate certain steps of an embodiment of the method according to the invention. Fig. 1 shows a schematic drawing of a blade bearing 1 of a wind turbine having bolt holes 2 receiving bolts when fixing a wind turbine blade to the hub.

Fig. 2 shows a cross section of such a bolt hole 2. The bolt hole 2 is formed in steel 3 which thus also forms the bolt hole wall 4. Since the steel 3 is subject to corrosion, the present method aims at protecting the bolt hole wall 4 from corrosion effects caused by water or respective water spray. To achieve this protection, a sleeve 5 as shown in Fig. 3 is used. The sleeve 5 is made from a corrosion resistant metallic material 6, in particular comprising zinc or aluminium or an alloy containing at least one of these metals. The outer diameter of the cylindrical sleeve 5 matches the inner diameter of the bolt hole wall 4.

Fig. 4 shows a schematic of an expander tool 7, in this case a tube expander as known from the respective fields of the art, for example an electrical rolling machine. The expander tool 7 in Fig. 3 is only exemplary; in particular, any kind of suitable commercially available tube expander may be applied.

According to the method, as shown in fig. 5, the sleeve 5 is inserted into the bolt hole 2 and expanded using the expander tool 7 to fix the sleeves 5 such that the metallic material 6 adheres to the bolt hole wall 4.

Fig. 6 shows the final product of this method. The whole wall 4 of the bolt hole 2 is covered by the sleeve 5, protecting the steel 3 from corrosion.

Optionally, the sleeve 5 may be chosen a bit longer than the length of the bolt hole 2 such that it protrudes over the bolt hole 2 at both ends, resulting in the forming of a holding rim 8 during the expanding process.

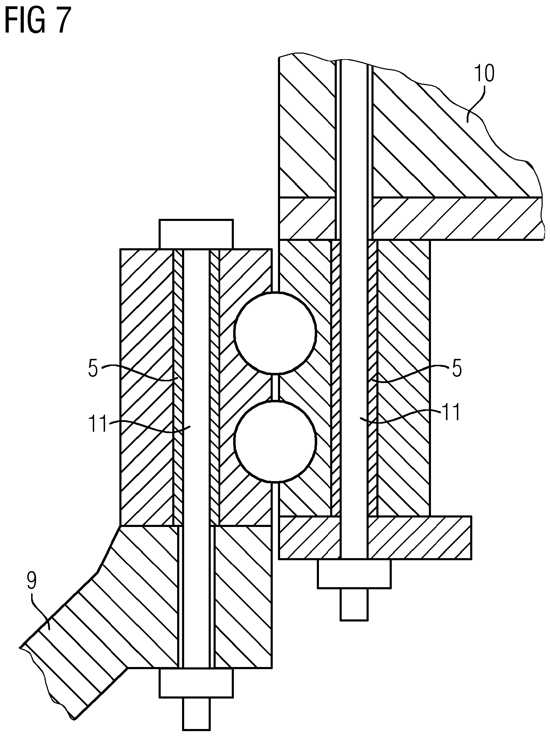

Finally, Fig. 7 shows a detail of a wind turbine according to the invention. The hub 9 and a root 10 of a blade of the wind turbine are connected using bolt connections, wherein bolts 11 extend through bolt holes 2. As can be seen from the section of Fig. 7, the corresponding bolt holes 2 each comprise a sleeve 5 inserted and fixed according to a method according to the invention.

Although the present invention has been described in detail with reference to the preferred embodiment, the present invention is not limited by the disclosed examples from which the skilled person is able to derive other variations without departing from the scope of the invention, as defined by the appended claims.

## Claims

1. Method for corrosion protection in bolt holes (2) of a wind turbine, wherein a sleeve (5) made of a corrosion resistant metallic material (6) is inserted into the bolt hole (2), **characterized in that** the sleeve is at least partly expanded using an expander tool (7) to be fixed in the bolt hole (2), and is in particular covering the whole length of the bolt hole wall (4).

2. Method according to claim 1, **characterized in that** the corrosion resistant metallic material comprises aluminium and/or zinc.

3. Method according to claim 1 or 2, **characterized in that** the sleeve (5) has a thickness of at least 1.2 mm, in particular 1.2 mm to 3 mm.

4. Method according to one of the preceding claims, **characterized in that** a tube expander, on particular a pneumatic or electric roller machine, is used as expander tool (7).

5. Method according to one of the preceding claims, **characterized in that** at least the end parts of the sleeves, in particular extending over at least 20% of the sleeve (5), are expanded.

6. Method according to claim 5, **characterized in that** the sleeve (5) is expanded over its whole length.

7. Method according to one of the preceding claims, **characterized in that** the sleeve (5) protrudes from the bolt hole (2) at at least one end, in particular both ends, to form a holding rim (8) when the sleeve (5) is expanded.

8. Wind turbine, comprising bolt holes (2) for bolted connection between components, wherein at least a part of the bolt holes (2) has a sleeve (5) made of a corrosion resistant metallic material (6) fixed therein by expanding, using a method according to any of the claims 1 to 7, and covering the whole length of the bolt holes (2).

9. Wind turbine according to claim 8, **characterized in that** the sleeved bolt holes (2) are used for connecting blade bearings to a hub (9).

10. Wind turbine according to claim 8 or 9, **characterized in that** the bolt hole walls (4) are made of steel (3) and/or the wind turbine is an offshore wind turbine.

## Patentansprüche

1. Verfahren für den Korrosionsschutz in Bolzenlöchern (2) einer Windenergieanlage, wobei eine Hülse (5) aus einem korrosionsbeständigen Metallmaterial (6) in das Bolzenloch (2) eingeführt ist, **dadurch gekennzeichnet, dass** die Hülse mithilfe eines in dem Bolzenloch (2) zu fixierenden Aufweitwerkzeugs (7) zumindest teilweise aufgeweitet ist und insbesondere die gesamte Länge der Bolzenlochwand (4) bedeckt.

2. Verfahren nach Anspruch 1, **dadurch gekennzeichnet, dass** das korrosionsbeständige Metallmaterial Aluminium und/oder Zink umfasst.

3. Verfahren nach Anspruch 1 oder 2, **dadurch gekennzeichnet, dass** die Hülse (5) eine Dicke von mindestens 1,2 mm, insbesondere 1,2 mm bis 3 mm aufweist.

4. Verfahren nach einem der vorherigen Ansprüche, **dadurch gekennzeichnet, dass** ein Rohraufweiter, insbesondere eine pneumatische oder elektrische Einwalzmaschine, als Aufweitwerkzeug (7) verwendet wird.

5. Verfahren nach einem der vorherigen Ansprüche, **dadurch gekennzeichnet, dass** zumindest die Endteile der Hülsen, die sich insbesondere über mindestens 20% der Hülse (5) erstrecken, aufgeweitet werden.

6. Verfahren nach Anspruch 5, **dadurch gekennzeichnet, dass** die Hülse (5) über ihre gesamte Länge aufgeweitet wird.

7. Verfahren nach einem der vorherigen Ansprüche, **dadurch gekennzeichnet, dass** die Hülse (5) an mindestens einem Ende, insbesondere beiden Enden, aus dem Bolzenloch (2) vorsteht und so einen Halterand (8) bildet, wenn die Hülse (5) aufgeweitet wird.

8. Windenergieanlage mit Bolzenlöchern (2) für eine Bolzenverbindung zwischen Komponenten, wobei in zumindest einem Teil der Bolzenlöcher (2) durch Aufweiten mithilfe eines Verfahrens nach einem der Ansprüche 1 bis 7 eine Hülse (5) aus einem korrosionsbeständigen Metallmaterial (6) fixiert ist und die gesamte Länge der Bolzenlöcher (2) bedeckt.

9. Windenergieanlage nach Anspruch 8, **dadurch gekennzeichnet, dass** die mit Hülse versehenen Bolzenlöcher (2) zum Verbinden von Blattlagern mit einer Nabe (9) verwendet werden.

10. Windenergieanlage nach Anspruch 8 oder 9, **dadurch gekennzeichnet, dass** die Bolzenlochwände (4) aus Stahl (3) hergestellt sind und/oder es sich bei der Windenergieanlage um eine Offshore-Windenergieanlage handelt.

## Revendications

1. Procédé de protection contre la corrosion dans des trous de boulon (2) d'une éolienne, dans lequel un manchon (5) constitué d'un matériau métallique résistant à la corrosion (6) est inséré dans le trou de boulon (2), **caractérisé en ce que** le manchon est au moins partiellement expansé à l'aide d'un outil expanseur (7) pour être fixé dans le trou de boulon (2), et recouvre en particulier la totalité de la longueur de la paroi de trou de boulon (4).

2. Procédé selon la revendication 1, **caractérisé en ce que** le matériau métallique résistant à la corrosion comprend de l'aluminium et/ou du zinc.

3. Procédé selon la revendication 1 ou 2, **caractérisé en ce que** le manchon (5) possède une épaisseur d'au moins 1,2 mm, en particulier de 1,2 mm à 3 mm.

4. Procédé selon l'une des revendications précédentes, **caractérisé en ce qu'**un dudgeon, en particulier une machine à cylindre pneumatique ou électrique, est utilisé comme outil expanseur (7).

5. Procédé selon l'une des revendications précédentes, **caractérisé en ce qu'**au moins les parties d'extrémité des manchons, en particulier s'étendant sur au moins 20 % du manchon (5), sont expansées.

6. Procédé selon la revendication 5, **caractérisé en ce que** le manchon (5) est expansé sur la totalité de sa longueur.

7. Procédé selon l'une des revendications précédentes, **caractérisé en ce que** le manchon (5) fait saillie à partir du trou de boulon (2) au niveau d'au moins une extrémité, en particulier des deux extrémités, pour former un bord de retenue (8) lorsque le manchon (5) est expansé.f

8. Éolienne, comprenant des trous de boulon (2) pour une liaison par boulon entre des composants, dans laquelle au moins une partie des trous de boulon (2) possède un manchon (5) constitué d'un matériau métallique résistant à la corrosion (6) fixé dans ceux-ci par expansion, à l'aide d'un procédé selon l'une quelconque des revendications 1 à 7, et recouvrant la totalité de la longueur des trous de boulon (2).

9. Éolienne selon la revendication 8, **caractérisée en ce que** les trous de boulon manchonnés (2) sont utilisés pour relier des paliers de pale à un moyeu (9).

10. Éolienne selon la revendication 8 ou 9, **caractérisée en ce que** les parois de trou de boulon (4) sont constituées d'acier (3) et/ou l'éolienne est une éolienne offshore.
